# EUROPEAN PATENT SPECIFICATION

(11) **EP 4 078 707 B1**
(45) Date of publication and mention of the grant of the patent: **06.12.2023**
(21) Application number: 19835417.7
(22) Date of filing: 20.12.2019
(51) Int. Cl.: H01M 8/18

(54) **ENVIRONMENTALLY FRIENDLY ZINC-IRON RECHARGEABLE FLOW BATTERY WITH HIGH ENERGY DENSITY**
UMWELTFREUNDLICHE WIEDERAUFLADBARE ZINK-EISEN-FLOW-BATTERIE MIT HOHER ENERGIEDICHTE
BATTERIE RÉDOX RECHARGEABLE ZINC-FER ÉCOLOGIQUE À HAUTE DENSITÉ D'ÉNERGIE

(43) Date of publication of application: 26.10.2022
(73) Proprietor: GENERBOX S.R.L., 22100 Como (IT)
(72) Inventor: ACCOGLI, Alessandra, 73030 DISO (IT); MAGAGNIN, Luca, 20017 RHO (IT)
(74) Representative: Palladino, Saverio Massimo
(86) International application number: PCT/EP2019/086863
(87) International publication number: WO 2021/121640

(56) References cited:
- WO-A1-2018/085634
- GB-A- 2 569 360
- US-A1- 2017 214 077

## Description

### FIELD OF THE INVENTION

The present invention relates to a rechargeable flow battery, which avoids the use of toxic or environmentally harmful chemicals.

### STATE OF THE ART

A redox flow battery (RFB) is an electrochemical device that uses electrolytes, containing one or more dissolved electro-active species, flowing through a power cell where chemical energy is converted into electricity. The two electrolytes are stored in two external tanks and pumped through separate circuits into two compartments of the electrochemical cell (the half-cells), separated by an ion permeable membrane, where oxidation and reduction reactions occur. Multiple cells may be employed in a so-called "stacked" configuration, connected in series or parallel, in order to increase the electrical output from the battery. Each cell consists of a positive electrode and a negative electrode, necessary to catalyze the oxidation-reduction reactions, and a membrane necessary for the conduction of ions to complete the electrical circuit. The electrolytes, namely the anolyte and the catholyte, flow separately in the two half-cells of the electrolytic cell. Redox rechargeable flow batteries, like vanadium or zinc-bromine or all iron flow batteries, store the electrical energy in a chemical form that is subsequently released in an electrical form by means of spontaneous reverse redox reactions. The discharged electrolyte can be flowed through the reactor cell under an applied voltage, such that electrical energy provided from outside can be converted back to chemical energy, and the charge-discharge cycles can proceed. With respect to the traditional rechargeable batteries based on lithium ions, oxidation and reduction reactions occur at the surface of the electrodes, avoiding the intercalation phenomena that can induce electrodes damage, increasing in this way the battery life cycle thus reducing maintenance costs. Moreover, due to the involved reactions, RFBs usually have very high efficiency and easily scalability, making these devices suitable for smart grid integration. At present, the most investigated and advanced technologies are the vanadium and the Zn-bromine RFBs. However, these technologies make use of expensive chemicals and are characterized by safety handling issues typically related to strong acidic conditions. Nowadays the main bulk of research is focused on finding an economically convenient and technically competitive flow battery chemistry, able to ensure long lifetime and high energy efficiency. Several examples can be found in patent and academic literature. Zinc-bromine batteries have been developed but the bromine toxicity and the relatively high costs presents several technical challenges. Considering only the Zn-Fe chemistry, two main patents can be considered.

Patent US 4,180,623 describes a Zn-Fe flow battery in which the iron-based electrolyte is a solution of alkali ferricyanide that, during discharge of the battery, is converted into the corresponding ferrocyanide. The use of cyanides has the drawback that at low pH values, these salts may produce hydrogen cyanide, which is extremely poisonous. Besides, the construction of this flow battery is rather complex, requiring separated tanks for the temporary storage of the two different solutions of cyanides, further to a third thank for the zinc salts solution.

Patent application WO 2018/085634 A1 describes another Zn-Fe flow battery in which the two electrolytes are solutions each containing chlorides of zinc and iron, at different concentrations of ions.

Moreover, in literature study, a Zn-Fe redox flow battery based on deep eutectic solvents (DES) has been proposed, with an open circuit potential of 1.02 V. Due to the chemistry involved, this device needs to work at high temperature values in order to provide useful power output, increasing in this way the operation costs.

It is an object of the present invention to provide a rechargeable flow battery that avoids the use of toxic or environmentally potentially harmful chemicals.

### SUMMARY OF THE INVENTION

This and other objects are achieved with the present invention, which relates to a Zn-Fe rechargeable flow battery (RFB); this flow battery uses low cost and earth abundant materials as reactive species, and provides a power source with high energy efficiency and high cell voltages.

In particular, the present invention provides a Zn-Fe RFB comprising:
- a first half-cell comprising a first electrolyte in which Zn²⁺ ions are dissolved, derived from dissolution of zinc sulfamate or zinc carbonate, and an electrode disposed within the first half-cell, said first half-cell connected in a closed-loop configuration through a first pump to a first external tank containing the first electrolyte;
- a second half-cell comprising a second electrolyte in which Fe²⁺ and Fe³⁺ ions are dissolved and one electrode disposed within the second half-cell, said second half-cell connected in a closed-loop configuration through a second pump to a second external tank containing the second electrolyte; and
- a separator between the two half-cells.

The two electrolytes are circulated, by means of the two pumps, to and from the corresponding half-cell.

In the two half-cells oxidation and reduction reactions occur to charge and discharge the battery. The electrodes in the two half-cells may be solid, e.g. metallic, slurry electrodes or porous carbon electrodes; alternatively, the first electrolyte may contain the electrodes in form of dispersed conductive particles where Zn can be deposited onto, and/or the second electrolyte may contain the electrode in form of dispersed conductive particles where oxidation-reduction (redox) reaction can occur.

Several additives can be preferentially included in either or both the electrolytes. In particular, the first electrolyte may comprise a hydrogen evolutionsuppressing agent, a complexing agent and/or a buffering agent; or, the second electrolyte may comprise a complexing agent and/or a buffering agent. In case of dispersed electrodes, also thickener additives may also be comprised.

A flow battery including materials like iron and zinc has the main advantage of lower costs especially if combined with the conventional and commercially available vanadium based RFBs.

With respect to other kinds of chemistry involving zinc salts, like zinc bromine batteries, this kind of chemistry is characterized by low toxicity, it is environmentally friendly and allows working at mild acidic conditions.

### DESCRIPTION OF THE FIGURES

The invention will be described in detail in the following with reference to the Figures, in which:
- Figure 1 shows a schematic representation of a flow battery according to the present invention;
- Figure 2 shows a schematic representation of a flow battery according to the present invention with dispersed particles in the first half-cell;
- Figure 3 shows a schematic representation of a flow battery according to the present invention with dispersed particles in the second half-cell;
- Figure 4 shows a schematic representation of a flow battery according to the present invention with dispersed particles in the two half-cells;
- Figure 5 shows in the upper part a graph of current density (*j*) vs time (s) and in the lower part a graph of cyclic voltammetry for a Zn-based solution prepared according to Example 1;
- Figure 6 shows a graph of a cyclic voltammetry for a Zn-based solution prepared according to the Example 8;
- Figure 7 shows the cyclic voltammetry graphs for Zn-based solutions with different amount of buffering agents into the solution;
- Figure 8 shows the cyclic voltammetry graphs for Zn-based solutions with different additives for dendrites suppression dissolve in solution according with Example1, Example 5 and Example 6;
- Figure 9 shows the cyclic voltammetry for Zn-based electrolyte with slurry electrodes according to Example 11;
- Figure 10 shows the cyclic voltammetry of Fe-based solution prepared following the procedure described in the Example 15;
- Figure 11 shows the cyclic voltammetry of a Fe-based solution prepared following the procedure described in Example 16;
- Figure 12 shows graphs of cyclic voltammetry tests for Zn-based and Fe-based electrolytes used in a redox flow battery of the invention;
- Figure 13 shows charge and discharge cycles for Zn-Fe RFBs according to the present invention with electrolytes prepared according to Example 1 and Example 15;
- Figure 14 represents the efficiency vs number of cycles for Zn-Fe RFBs of the present invention using electrolyte produced following the procedure described in Example 1 and Example 15;
- Figure 15 shows charge and discharge cycles for Zn-Fe RFBs according to the present invention with electrolytes prepared according to Example 5 and Example 15;
- Figure 16 represents the efficiency vs number of cycles for Zn-Fe RFBs of the present invention using electrolyte produced following the procedure described in Example 5 and Example 15;
- Figure 17 shows charge and discharge cycles for Zn-Fe RFBs according to the present invention with electrolytes prepared according to Example 7 and Example 15;
- Figure 18 represents the efficiency vs number of cycles for Zn-Fe RFBs of the present invention using electrolyte produced following the procedure described in Example 7 and Example 15;
- Figure 19 shows charge and discharge cycles at different current densities according for Zn-Fe RFBs to the present invention with electrolytes prepared according to Example 7 and Example 15;
- Figure 20 shows charge and discharge cycles at different current densities according for Zn-Fe RFBs to the present invention with electrolytes prepared according to Example 8 and Example 16.

### DETAILED DESCRIPTION OF THE INVENTION

Rechargeable flow batteries work as energy sources when they operate in discharge mode, while act as energy storage devices when they operate in charge (recharge) mode.

In the RFB of the present invention, the two different half-cells reactions involved during charge and discharge phase are:
1. Charge phase:

| | |
|---|---|
| Zn²⁺ + 2 e⁻ → Zn⁰ | Negative electrode, cathode, reduction |
| 2 Fe²⁺ → 2 Fe³⁺ + 2 e⁻ | Positive electrode, anode, oxidation |

2. Discharge phase:

| | |
|---|---|
| Zn⁰ → Zn²⁺ + 2 e⁻ | Negative electrode, anode, oxidation |
| 2 Fe³⁺ + 2 e⁻ → 2 Fe²⁺ | Positive electrode, cathode, reduction |

In other words, during the charging phase zinc is electroplated onto the negative electrode, while Fe²⁺ is oxidized to Fe³⁺; during the discharge phase the reverse reactions occur, i.e. zinc is oxidized and Fe³⁺ reduced, refreshing the electrolyte.

The electrolyte containing the zinc ions, reacting at the negative electrode, is called anolyte, while the electrolyte containing the ferric and ferrous ions, reacting at the positive electrode, is called catholyte.

Both in charge and in discharge mode, the electrode where the reduction reaction takes place is the cathode, while the electrode where the oxidation reaction takes place is the anode, so that the anode in charge mode is the cathode in discharge mode, and vice versa.

### The Zn-based electrolyte (the first electrolyte)

The first electrolyte of the invention is a solution containing Zn²⁺ ions. This solution may be prepared by dissolving in the solvent (generally water, but also mixtures water-glycol or other water-based mixtures known in the field) zinc sulfamate (Zn(SO₃NH₂)₂), zinc carbonate (ZnCOs) or a combination thereof. In a preferred embodiment, this electrolyte is produced by dissolving zinc sulfamate, allowing a very high efficiency, and has a concentration of Zn²⁺ ions between 0.001 M and 10 M, preferably from 0.5 M to 5 M, still more preferably from 1 M to 2 M.

The pH of the first electrolyte is from about 1 to about 6, preferably from 1.5 to 5, more preferably from 2 to 4, still more preferably from 3 to 4.

As known in the field of electrochemistry, this electrolyte may contain additives such as hydrogen evolution suppressor(s), Zn complexing agents, buffering agent(s), levelling agent(s), brightener(s), corrosion protective compounds, and similar additives, for stabilizing the operation of the half-cell and increasing the battery performances, as detailed below.

A first possible additive is a buffering agent, which is added in order to increase the battery efficiency and to avoid pH variations inducing efficiency losses. This component may be selected from the group consisting of citrate salts, ammonium-based salts, phosphate salts or combinations thereof. The concentration of such buffering agent(s) is in the range of 0.001 M to 10 M, preferably from 0.1 M to 5 M, preferably from 0.5 M to 2 M. Preferred is the use of a citrate buffer.

Another possible additive of the first electrolyte is a hydrogen evolution suppressor. This component is added in order to increase the battery coulombic efficiency and to reduce side reaction during the charging phase; this additive is also effective in avoiding pH variation of the electrolyte. The hydrogen evolution suppressor may be selected among Pb, Bi, Mn, W, Cd, As, Sb, Sn and their oxides, boric acid or a combination thereof, in an overall concentration in the range between 0.001 M to 5 M, preferably from 0.01 M to 2 M, still more preferably from 0.05 M to 1 M.

Another class of additives is represented by metallic salts, which are added in order to increase the electrolyte conductivity. Example of salts added to this end are AlCl₃, Al₂(SO₄)₃, MgCl₂, MgSO₄ NaCl, Na₂SO₄, LiCI, Li₂SO₄, KCI, NH₄Cl or combinations thereof. In a preferred embodiment, the concentration of these additives is in a range between 0.001 M and 5 M, preferably from 0.1 M to 2 M, still more preferably from 0.5 M to 1 M. These salts are selected in order to achieve a conductivity value higher than 10 mS/cm, preferably from 100 to 850 mS/cm. Preferred is the use of aluminium sulfate, Al₂(SO₄)₃ as main additive in a range between 0.1 M and 5 M, preferably between 0.5 M and 2 M.

The first electrolyte may further contain Rochelle salts in a concentration between 0.001 M and 10 M, preferably from 0.1 M to 5 M, preferably from 0.5 M to 2 M; these salt act complexing zinc ions and increasing the conductivity of the electrolyte.

Another possible additive of the first electrolyte is a levelling agent, reducing the dendritic growth of electrodeposited zinc, which would affect the long-time performances of the battery. Levelling agents include, e.g., polyethylene glycol (PEG), polyethylenimine (PEI), dextrins, cyclodextrins, sucrose, glucose, caffeine or combinations thereof, whose concentration is comprising between 0.0001 ppm to 10000 ppm, preferably from 0.002 to 5000 ppm, still more preferably from 1 ppm to 1000 ppm. In a preferred embodiment, the Zn-based electrolyte contains PEI from 0.01 to 5000 ppm, preferably from 1 ppm to 2000, more preferably from 5 ppm to 1000 ppm.

Other possible additives of the first electrolyte are Fe and Cu salts. While not being bound to any particular theory, it is believed that these metal additives increase the redox reactions efficiency and may reduce the contamination through the separator between the two half-cells, may facilitate the formation of dendrite-free deposits and may increase the RFB efficiency.

As another aspect, the invention relates also the addition of thickener additives necessary to guarantee the better particles dispersion and a suitable electrolyte viscosity in case of dispersed particles. The amount of these organic additives is comprised in a range between 0.0001% to 10% by weight of the electrolyte, preferably from 0.1% to 5%, still more preferably from 0.1% to 1% by weight. In a preferred embodiment, the zinc-based electrolyte contains organic additives including but not limited to Xanthan gum, Arabic gum, Carboxymethyl cellulose, Chitosan, Agar-Agar, sodium alginate and polyethylene oxide.

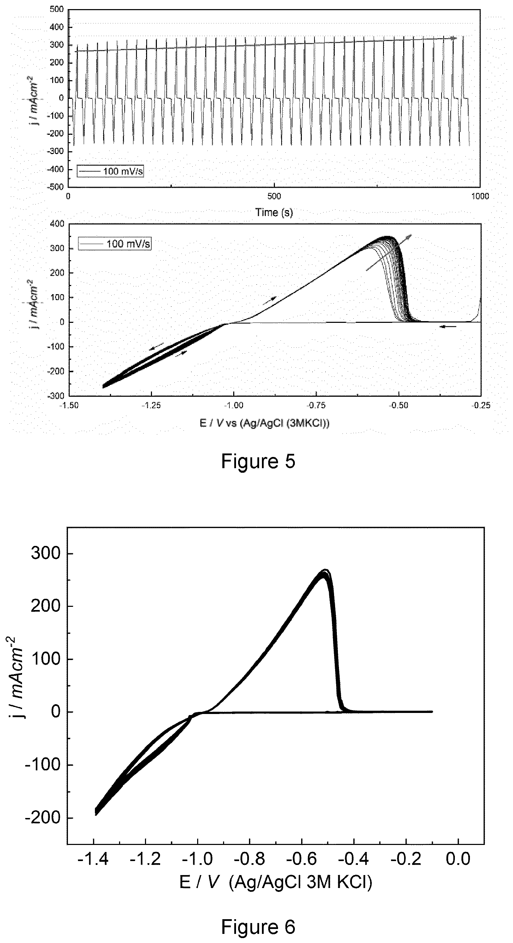

The Zn based electrolyte of the invention has a cathodic efficiency from 50% to 99%, preferably from 60% to 99%, still more preferably from 95% to 99% as shown in Figure 5.

The first electrolyte works in a temperature range between 20 °C and 70 °C, preferably from 20 °C to 50 °C, more preferably at room temperature.

### The Fe-based electrolyte (the second electrolyte)

The second electrolyte of the invention is a solution containing Fe²⁺ and Fe³⁺ ions. In a preferred embodiment of the invention, this solution obtained by dissolving mixtures of ferrous (Fe²⁺) and ferric (Fe³⁺) salts, for instance iron chlorides, iron sulfates, iron sulfamates, iron acetates, iron carbonates in amounts such to obtain a concentration of Fe²⁺ ions in the range from 0.001 M to 10 M and/or Fe³⁺ ions concentration in the range of 0.01 M to 10 M. Preferably, the source of iron ions are the salts FeCl₂ and FeCl₃ (possibly in their hydrated forms), in a concentration comprises between 0.1 M and 10 M for each metallic ion concentration, preferably from 0.5 M to 4 M, still more preferably from 0.5 M to 2 M.

The pH of the second electrolyte is from about 0.1 to 6, preferably from 0.5 to 5, still more preferably from 0.95 to 3.

The second electrolyte may contain additives.

A first kind of possible additives are compounds acting as complexing agents for the Fe²⁺ and Fe³⁺ ions; these agents also cause an increase of pH, and are selected preferably among soluble citrate salts, tartaric salts, ammonium-based salts, oxalic salts and EDTA, in a concentration between 0.001 M to 10 M, preferably from about 0.1 M to about 2 M. Preferred is the use of citrate salts in a range between 0.001 M to 5 M, preferably from 0.1 to 1 M, still more preferably from 0.1 M to 0.5 M. The addition of this complexing agent also cooperates to maintain the pH of the electrolyte in the range mentioned above.

Another class of possible additives of the second electrolyte is represented by stabilizing agents necessary for the stabilization of iron metallic ions and the prevention the formation of iron hydroxide affecting the battery performances. Examples of stabilizing additives are ammonium salts, oxalates, acetates, tartrates, ascorbic acid, ethylene glycol and dimethyl sulfoxide (DMSO), in a range between 0.001 M to 10 M, preferably from about 0.1 M to about 2 M. Preferably, the stabilizing additive is ascorbic acid in a concentration between 0.001 M and 5 M, preferably from 0.1 to 1 M, still more preferably from 0.1 M to 0.5 M.

Examples of salts added to this end are AlCl₃, Al₂(SO₄)₃, MgCl₂, MgSO₄, NaCl, Na₂SO₄, LiCl, Li₂SO₄, KCI, NH₄Cl or combinations thereof. In a preferred embodiment, the concentration of these additives is in a range between 0.001 M and 5 M, preferably from 0.1 M to 2 M, still more preferably from 0.5 M to 1 M. These salts are selected in order to achieve a conductivity value higher than 10 mS/cm, preferably from 100 to 850 mS/cm.

Finally, other possible additives of the second electrolyte are Zn and Cu salts. While not being bound to any particular theory, it is believed that these metal additives increase the redox reactions efficiency and may reduce the contamination through the separator between the two half-cells, may facilitate the formation of dendrite-free deposits and may increase the RFB efficiency.

As another aspect, the invention relates also the addition of thickener additives necessary to guarantee the better particles dispersion and a suitable electrolyte viscosity in case of dispersed particles. The amount of these organic additives is comprised in a range between 0.0001% to 10% by weight of the electrolyte, preferably from 0.1% to 5%, still more preferably from 0.1% to 1% by weight. In a preferred embodiment, the iron-based electrolyte contains organic additives including but not limited to Xanthan gum, Arabic gum, carboxymethyl cellulose, chitosan, Agar-Agar, sodium alginate and polyethylene oxide.

The second electrolyte works in a temperature range between 20 °C and 70 °C, preferably from 20 °C to 50 °C, more preferably at room temperature.

### The electrodes

The electrodes used in the Zn-Fe RFB can be selected from any kind of electrode material.

The electrodes may be made of carbon-based material, may be metallic (for instance a plate or in the form of a foam or a net), or they may be in the form of dispersed electrodes. In the first case, the electrodes may also constitute current collectors connected to the external electric circuit of the system, even though the presence of an additional current collector in contact with the electrode is not excluded; in the second case, i.e. dispersed electrodes, the presence of an additional current collector in the half-cells is instead mandatory.

Carbon-based electrodes may be made, e.g., of graphite sheets, carbon felt, or carbon-based fabric; alternatively, carbon-based electrodes are formed of carbon-based conductive particles dispersed in a polymer matrix. Carbon-based electrodes are suitable for both the first and the second half-cells.

Preferably, metallic electrodes for use in the first half-cell may consist in a Zn metallic plate, coated Zn metallic plate, Zn metallic foams, Zn coated metallic foams or net.

Metallic electrodes for use in the second half-cell may consist in carbon-based electrode, a Fe plate, a coated Fe metallic plate or carbon-based electrodes coated with Fe; preferred are carbon-based electrodes.

Dispersed electrodes, defined as a percolated network of dispersed particles, may consists in organic or inorganic conductive particles, functionalized particles or a fluidized bed electrode in the form of particles. These electrodes can be dispersed in both electrolytes; they are particles in/on which redox reactions can occur. Examples of these dispersed electrodes are metallic particles, graphite, graphene, graphene oxide, transition metal oxide particles, carbon-based materials decorated with metal oxide particles, carbon nanotubes, carbon black particles, metal-coated particles or a combination of two or more thereof; the average size of these particles is in the range from 10 nm to 1000 µm preferably from 20 nm to 500 µm , more preferably from 20 nm to 200 µm, still more preferably from 20 nm to 100 µm.

In a preferred embodiment, the dispersed electrode in the Zn-based electrolyte may contain Zn particles, Zn coated particles and/or carbon black in an amount comprises in the range from 0.01 % by weight to 50% by weight, preferably from 1% by weight to 30% by weight, still more preferably from 5% by weight to 20% by weight.

In a preferred embodiment, the dispersed electrode in the second half-cell may contains iron particles, iron oxides, mix oxides and/or carbon black in an amount comprised in the range from 0.01% by weight to 70% by weight, preferably from 0.1 % by weight to 30% by weight, still more preferably from 2.5% by weight to 15% by weight. The composition of the dispersed electrodes can be tuned in order to impart electrode conductivity to the electrolytes.

Using dispersed electrodes provides a high surface area, which minimizes the over potential for zinc plating/dissolution and affords a higher cycle life (compared to plating on a flat electrode); in case of dispersed electrodes in the iron-based half-cell, the addition of slurry electrodes can induce a higher battery capacity.

Slurry electrodes are in the form of an ink of electrically conductive particles in/on which redox reactions can occur. Materials useful for the production of these slurry electrodes are metallic particles, graphite, graphene, graphene oxide, transition metal oxide particles, carbon-based materials decorated with metal oxide particles, carbon nanotubes, carbon black particles, metal-coated particles or a combination of two or more thereof. The average size of the particles of the slurry is in the range from 10 nm to 1000 µm, preferably from 20 nm to 500 µm, more preferably from 20 nm to 200 µm, still more preferably from 20 nm to 100 µm. Polymeric powders can be introduced in the mixture, acting as binders for the other particles. In a preferred embodiment the amount of conductive carbon particles in the slurry electrode is selected from 50% to 95%, in another embodiment from 60% to 90%, in still another embodiment from 70% to 80% of the overall electrode mass. The amount of active particles containing zinc can be selected from 1% to 50%, more preferably from 5% to 30%, still more preferably from 10% to 20% of the overall electrode mass. The amount of binder is selected from 0.1% to 20%, more preferably from 0.5% to 10%, still more preferably from 5% to 10% of the overall electrode mass. The composition of the slurry can be tuned in order to impart electrode conductivity to the two electrolytes.

In a preferred embodiment, slurry electrodes employed in the first half-cell are a slurry of electrically conductive particles in/on which the Zn²⁺/Zn redox reaction can occur. Materials useful for the production of these slurry electrodes are Zn particles, graphite, graphene, graphene oxide, transition metal oxide particles, carbon-based materials decorated with metal oxide particles, carbon nanotubes, carbon black particles, Zn coated particles or a combination of two or more thereof; the average size of the particles of the slurry is in the range from 10 nm to 1000 µm, preferably from 20 nm to 500 µm more preferably from 20 nm to 200 µm still more preferably from 20 nm to 100 µm.

In a preferred embodiment slurry electrodes for use in the second half-cell are formed of a slurry of electrically conductive particles on which Fe²⁺/Fe³⁺ redox reactions can occur; materials useful for the production of this slurry electrode are, e.g., graphite, graphene oxide, carbon nanotubes, transition metal oxide particles, carbon-based materials decorated with metal oxide particles; the average size of the particles of the slurry is in the range from 10 nm to 1000 µm preferably from 20 nm to 500 µm, more preferably from 20 nm to 200 µm, still more preferably from 20 nm to 100 µm.

### The RFB

The flow battery of the invention is formed by the two half-cells, characterized by the two electrolytes and reactions, described above.

The two half-cells are in contact through a separator membrane. The separator can be chosen among all suitable materials acting as ionic membrane, depending on purpose. In a first possible embodiment, the membrane is an anionic membrane suitable for batteries where anolyte and catholyte have a different pH, to reduce as much as possible electrolytes cross mixing. In another embodiment the membrane could be a porous membrane with or without an ion exchange material or a glassceramic separator.

An iron-zinc flow battery in accordance with the present invention can generally have a cell potential of about 1.4 V, which is comparable to commercially available flow batteries and is generally environmentally friendly, non-toxic and safer if compared to other flow batteries. With respect to the commercially available RFBs, the electrochemical device of the present invention allows to work at higher pH values, i.e. lower acid concentration, increasing the battery lifetime and reducing strongly the maintenance costs.

Moreover, the zinc-iron flow battery of the invention is significantly cheaper than known RFBs: the cost of this battery may be lower than $200/kWh for the battery and about $30/kWh for the electrolyte and tanks, providing an energy efficiency between 70-85%.

The RFB of the present invention can be also electrically coupled in a so-called stacked configuration, connected either in series to obtain higher voltage values, or in parallel to obtain higher current outputs.

In the following, several specific embodiments of RFBs of the invention are described with reference to the attached Figures; in the Figures, same numbers correspond to identical elements.

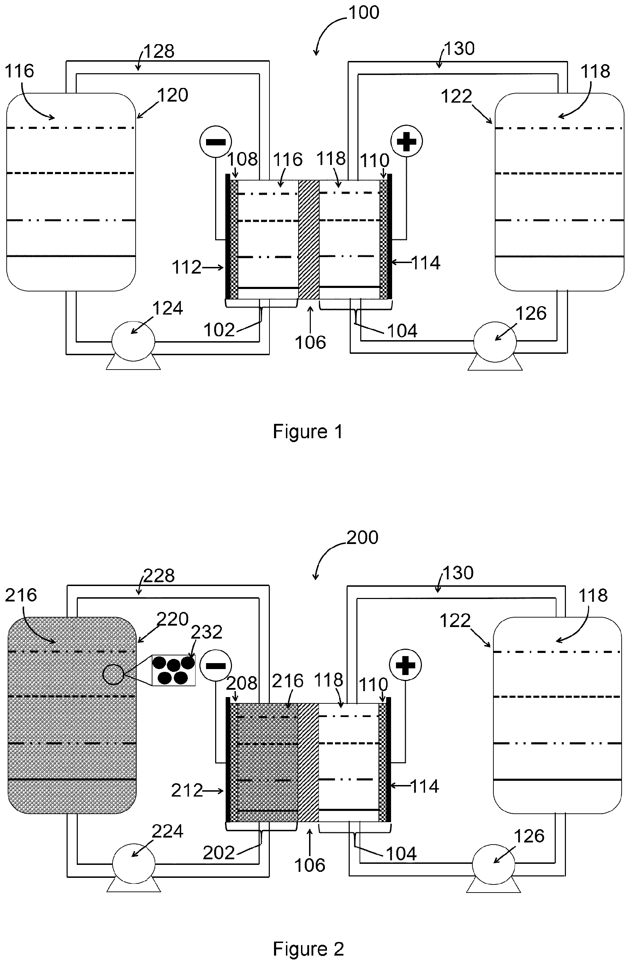

In the description of the first embodiment (with reference to Fig. 1), the operation of the RFB is divided in two separate parts, the first part referred to the charge or recharge phase (i.e., the RFB acting as an energy storage device) and the second part referred to the discharge phase (i.e., the RFB acting as an energy source); this avoids ambiguities in the use of terms like cathode/anode and similar.

### Operation in (re)charge phase

In Figure 1 is shown a first embodiment of a zinc-iron RFB, 100, of the present invention. The flow battery includes two half-cells, 102 and 104, and a separator, 106.

The first half-cell 102 includes electrode 108 in contact with the first electrolyte 116 and a current collector (112); in this half-cell takes place the cathodic reaction, the reduction of Zn²⁺ to metallic zinc, at the surface of electrode 108. The first electrolyte, 116, is stored in external tank 120, and flows by mean of a pump (124) and a valve system (not shown in the figure) through half-cell 102 while the redox reaction occurs. Once the redox reaction has taken place, the first electrolyte is recirculated to storage tank 120 through external pipe 128, while the fresh/regenerated electrolyte can enter the electrolytic cell.

Similarly, the second half-cell 104 includes electrode 110 in contact with the second electrolyte 118 and a current collector (114); in this half-cell takes place the anodic reaction, the oxidation of Fe²⁺ to Fe³⁺, at the surface of electrode 110. The second electrolyte, 118, is stored in external tank 122, and flows by mean of a pump (126) and a valve system (not shown in the figure) through half-cell 104 while the redox reaction occurs. Once the redox reaction has taken place, the second electrolyte is recirculated to storage tank 122 through external pipe 130, while the fresh/regenerated electrolyte can enter the electrolytic cell.

### Operation in discharge phase

In the discharge phase, the zinc-iron RFB, 100, of the present invention operates contrary to the (re)charge phase described above. The elements of the RFB are the same, but in this case in the first half-cell takes place the oxidation reaction of metallic zinc to Zn²⁺, while in the second half-cell takes place the reduction reaction of Fe³⁺ to Fe²⁺.

The description of the further embodiments of Figures 2-4 is only made with reference to the (re)charge mode.

In Figure 2, is shown a second embodiment of the zinc-iron RFB (200) of the invention. In this RFB, the second half-cell is identical to the second half-cell of the RFB 100 of the first embodiment, while the first half-cell, 202, is different. The flow battery includes half-cells 202 and 104 and a separator (106). The first half-cell 202 includes an electrode 208 in contact with an electrolyte 216 and the current collector 212. The electrolyte 216 contains conductive particles (232) acting as sites where the Zn reduction reaction occurs; active particles 232 are preferably zinc particles. Electrolyte 216 is stored in external tank 220, and flows by mean of a pump (224) and a valve system (not shown in the figure) through half-cell 202 while the redox reaction occurs. Once the redox reaction has taken place, the first electrolyte is recirculated to storage tank 220 through external pipe 228, while the fresh/regenerated electrolyte 216 can enter the electrolytic cell.

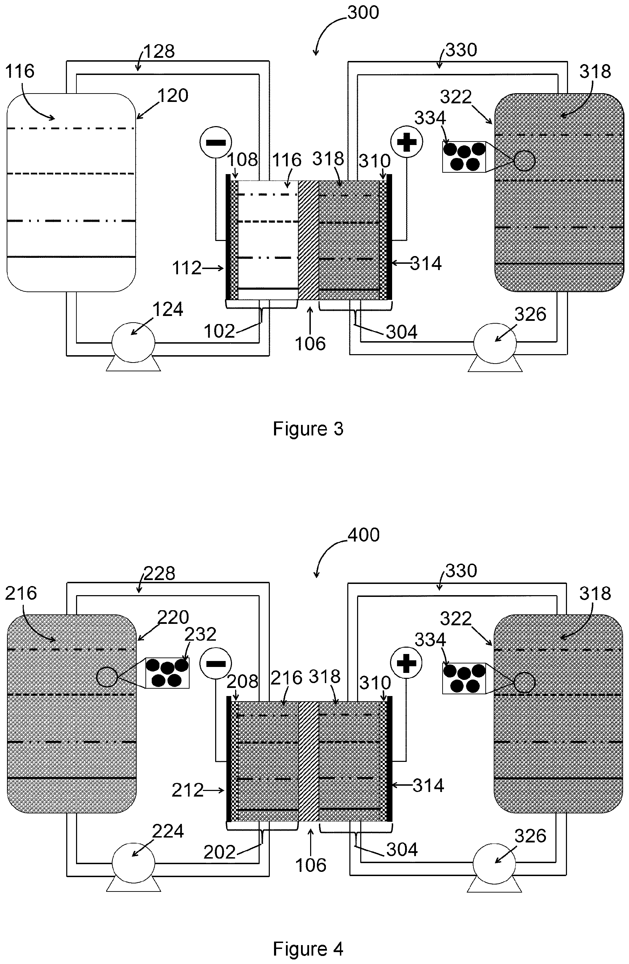

In Figure 3, is shown a third embodiment of the zinc-iron RFB (300) of the invention. In this RFB, the first half-cell is identical to the first half-cell of the RFB 100 of the first embodiment, while the second half-cell, 304, is different. The flow battery includes half-cells 304 and 102 and a separator (106). The second half-cell 304 includes an electrode 310 in contact with electrolyte 318 and the current collector 314. The electrolyte 318 contains conductive particles (334) acting as sites where the Fe²⁺/Fe³⁺ reaction can occur; active particles 334 are preferably carbon-based particles. Electrolyte 318 is stored in external tank 322, and flows by mean of a pump (326) and a valve system (not shown in the figure) through half-cell 304 while the redox reaction occurs. Once the redox reaction has taken place, electrolyte 318 is recirculated to storage tank 322 through external pipe 330, while the fresh/regenerated electrolyte 318 can enter the electrolytic cell.

Finally, in a fourth possible embodiment of the invention, the RFB, 400, is constituted by the combination of the two half-cells with dispersed particles illustrated above with reference to the second and third embodiments, namely, first half-cell 202 and second half-cell 304, this embodiment is shown in Figure 4.

The invention will be further illustrated by the examples that follow.

### Example 1

### Preparation and characterization of a zinc-based electrolyte

A solution has been prepared dissolving sulfamic acid, NH₂S(O)₂OH, in Millipore water at a temperature about 40-50 °C with a concentration of 236 g/L, followed by the zinc carbonate basic, [ZnCO₃]₂·[Zn(OH)₂]₃. The solution has then allowed to cool down to ambient temperature, after which aluminum sulfate octadecahydrate, Al₂(SO₄)₃·18H₂O, has been added to increase conductivity of the final solution. The final formulation is shown in Table 1. The pH of the solution has been adjusted to 3.5 using sodium hydroxide. The as prepared solution can work from 25 °C to 70 °C.

**Table 1: example of Zn based electrolyte**

| **Chemical compound** | **Chemical formula** | **Molar mass [g/mol]** | **Concentration [g/L]** | **Concentration [mol/l]** |
|---|---|---|---|---|
| Sulfamic acid | NH₂HSO₃ | 97.10 | 236 | 2.43 |
| Zinc carbonate basic | [ZnCO₃]₂·[Zn(OH)₂]₃ | 548.96 | 109.8 | 1 M of Zn |
| Aluminum sulfate octadecahydrate | Al₂(SO₄)₃·18H₂O | 666.43 | 66.6 | 0.1 |

### Example 2

### Preparation of a zinc-based electrolyte for the RFB half-cell

A solution has been prepared dissolving 258 g/L of zinc sulfamate salt, Zn(NH₂SO₃)₂·4H₂O, in Millipore water at temperature about 40-50 °C. In order to increase the electrical conductivity, lithium sulfate and aluminum sulfate have been added, increasing the conductivity from 60 to 150 mS/cm. The pH of the solution has been adjusted to 2.7 using sodium hydroxide. The final formulation of the solution is shown in Table 2.

**Table 2: example of Zn based electrolyte**

| **Chemical compound** | **Chemical formula** | **Concentration [g/L]** | **Concentration [mol/l]** |
|---|---|---|---|
| Zinc sulfamate | Zn(NH₂SO₃)₂·4H₂O | 258 | 1 M of Zn |
| Aluminum sulfate octadecahydrate | Al₂(SO₄)₃·18H₂O | 33.3 | 0.05 |
| Lithium sulfate | Li₂SO₄ | 54.5 | 0.5 |

### Example 3

### Preparation of a zinc-based electrolyte for the RFB half-cell

The solution has been prepared dissolving 258 g/L of zinc sulfamate salt, Zn(NH₂SO₃)₂·4H₂O in Millipore water. In order to increase the electrical conductivity, lithium sulfate and aluminum sulfate have been added, increasing the conductivity from 60 to 90 mS/cm. The pH of the solution has been adjusted to 3 using sodium hydroxide. In order to keep the pH stable during the electrodeposition of zinc, sodium citrate and citric acid have been added. The final formulation of the solution is shown in Table 3.

**Table 3: example of Zn based electrolyte**

| **Chemical compound** | **Chemical formula** | **Concentration [g/L]** | **Concentration [mol/l]** |
|---|---|---|---|
| Zinc sulfamate | Zn(NH₂SO₃)₂·4H₂O | 258 | 1 M of Zn |
| Aluminum sulfate octadecahydrate | Al₂(SO₄)₃·18H₂O | 66.6 | 0.1 |
| Lithium sulfate | Li₂SO₄ | 54.5 | 0.5 |
| Sodium citrate tribasic | C₆H₅Na₃O₇·2H₂O | 2 | 0.006 |
| Citric acid | C₆H₈O₇ | 3.25 | 0.016 |

### Example 4

### Preparation of a zinc-based electrolyte for the RFB half-cell

The solution has been prepared dissolving 258 g/L of zinc sulfamate salt Zn(NH₂SO₃)₂·4H₂O in Millipore water. In order to increase the electrical conductivity, lithium sulfate and aluminum sulfate have been added, increasing the conductivity from 60 to 90 mS/cm. The pH of the solution has been adjusted to 3 using sodium hydroxide. In order to keep the pH stable during the electrodeposition of zinc, sodium citrate and citric acid have been added. The final formulation of the solution is shown in Table 4.

**Table 4: example of Zn based electrolyte**

| **Chemical compound** | **Chemical formula** | **Concentration [g/L]** | **Concentration [mol/l]** |
|---|---|---|---|
| Zinc sulfamate | Zn(NH₂SO₃)₂·4H₂O | 258 | 1 M of Zn |
| Aluminum sulfate octadecahydrate | Al₂(SO₄)₃·18H₂O | 66.6 | 0.1 |
| Lithium sulfate | Li₂SO₄ | 54.5 | 0.5 |
| Sodium citrate tribasic | C₆H₅Na₃O₇·2H₂O | 2 | 0.006 |
| Citric acid | C₆H₈O₇ | 9.6 | 0.04 |

### Example 5

### Preparation of a zinc-based electrolyte for the RFB half-cell

The solution has been prepared dissolving 258 g/L of zinc sulfamate salt Zn(NH₂SO₃)₂·4H₂O in Millipore water. In order to increase the electrical conductivity, lithium sulfate and aluminum sulfate have been added, increasing the conductivity from 60 to 150 mS/cm. The pH of the solution has been adjusted to 4 using sodium hydroxide. In order to keep the pH stable during the electrodeposition of zinc, sodium citrate and citric acid have been added. To suppress dendrites formation induced by the fast kinetics of the reaction, PEG has been added obtaining a solution having the composition as shown in Table 5.

**Table 5: example of Zn based electrolyte**

| **Chemical compound** | **Chemical formula** | **Concentration [g/L]** | **Concentration [mol/l]** |
|---|---|---|---|
| Zinc sulfamate | Zn(NH₂SO₃)₂·4H₂O | 258 | 1 M of Zn |
| Lithium sulfate | Li₂SO₄ | 109 | 1 |
| Aluminum sulfate octadecahydrate | Al₂(SO₄)₃·18H₂O | 666.6 | 1 |
| Sodium citrate tribasic | C₆H₅Na₃O₇·2H₂O | 2 | 0.006 |
| Citric acid | C₆H₈O₇ | 9.6 | 0.04 |
| PEG 8000 | C₂ₙH₄ₙ₊₂Oₙ₊₁ | 0.5 | 6.25 × 10⁻⁵ |

### Example 6

### Preparation of a zinc-based electrolyte for the RFB half-cell

The solution has been prepared dissolving 258 g/L of zinc sulfamate salt Zn(NH₂SO₃)₂·4H₂O in Millipore water. In order to increase the electrical conductivity, aluminum sulfate has been added, increasing the conductivity from 60 to 90 mS/cm. The pH of the solution has been adjusted to 3 using sodium hydroxide. In order to keep the pH stable during the electrodeposition of zinc, sodium citrate and citric acid have been added. To suppress dendrites formation induced by the fast kinetics of the reaction, PEI has been added to the solution as shown in Table 6.

**Table 6: example of Zn based electrolyte**

| **Chemical compound** | **Chemical formula** | **Concentration [g/L]** | **Concentration [mol/l]** |
|---|---|---|---|
| Zinc sulfamate | Zn(NH₂SO₃)₂·4H₂O | 258 | 1 M of Zn |
| Aluminum sulfate octadecahydrate | Al₂(SO₄)₃·18H₂O | 66.6 | 0.1 |
| Sodium citrate tribasic | C₆H₅Na₃O₇·2H₂O | 2 | 0.006 |
| Citric acid | C₆H₈O₇ | 3.25 | 0.016 |
| Polyethylenimine (PEI) | (C₂H₅N)ₙ | 0.05 | 8.3 × 10⁻⁸ |

### Example 7

### Preparation of a zinc-based electrolyte for the RFB half-cell

The solution has been prepared dissolving in Millipore water 258 g/L of zinc sulfamate salt. In order to increase the electrical conductivity, lithium sulfate and aluminum sulfate have been added, increasing the conductivity from 60 to 150 mS/cm. The pH of the solution has been adjusted to 3 using sodium hydroxide. In order to keep the pH stable during the electrodeposition of zinc, sodium citrate and citric acid have been added. To suppress dendrites formation induced by the fast kinetics of the reaction, PEI has been added to the solution as shown in Table 7.

**Table 7: example of Zn based electrolyte**

| **Chemical compound** | **Chemical formula** | **Concentration [g/L]** | **Concentration [mol/l]** |
|---|---|---|---|
| Zinc sulfamate | Zn(NH₂SO₃)₂·4H₂O | 258 | 1 M of Zn |
| Aluminum sulfate octadecahydrate | Al₂(SO₄)₃·18H₂O | 66.6 | 0.1 |
| Lithium sulfate | Li₂SO₄ | 109 | 1 |
| Sodium citrate tribasic | C₆H₅Na₃O₇·2H₂O | 2 | 0.006 |
| Citric acid | C₆H₈O₇ | 3.25 | 0.016 |
| Polyethylenimine (PEI) | (C₂H₅N)ₙ | 0.05 | 8.3 × 10⁻⁸ |

### Example 8

### Preparation of a zinc-based electrolyte for the RFB half-cell

The solution has been prepared dissolving in Millipore water 516 g/L of zinc sulfamate salt. In order to increase the electrical conductivity, lithium sulfate and aluminum sulfate have been added, increasing the conductivity from 60 to 150 mS/cm. The pH of the solution has been adjusted to 3 using sodium hydroxide. In order to keep the pH stable during the electrodeposition of zinc, sodium citrate and citric acid have been added. To suppress dendrites formation induced by the fast kinetics of the reaction, PEI has been added to the solution as shown in Table 8.

**Table 8: example of Zn based electrolyte**

| **Chemical compound** | **Chemical formula** | **Concentration [g/L]** | **Concentration [mol/l]** |
|---|---|---|---|
| Zinc Sulfamate | Zn(NH₂SO₃)₂·4H₂O | 516 | 2 M of Zn |
| Aluminum sulfate octadecahydrate | Al₂(SO₄)₃·18H₂O | 66.6 | 0.1 |
| Lithium sulfate | Li₂SO₄ | 109 | 1 |
| Sodium citrate tribasic | C₆H₅Na₃O₇·2H₂O | 2 | 0.006 |
| Citric acid | C₆H₈O₇ | 3.25 | 0.016 |
| Polyethylenimine (PEI) | (C₂H₅N)ₙ | 0.05 | 8.3 × 10⁻⁸ |

### Example 9

### Electrochemical characterization of zinc-based electrolyte for the RFB half-cell

The electrochemical behavior of the solution prepared according to Example 1 has been characterized with cyclic voltammetries in a classical three electrodes cell using glassy carbon as working electrode, Pt net as counter electrode and Ag/AgCl 3 M KCI as reference electrode with AMEL 2550 Potentiostat/galvanostat at 25 °C. As shown in Figure 5b, the classical peaks for Zn deposition and stripping can be detected. The cathodic efficiency of the process can be estimated to be equal to 90% (Figure 5a).

### Example 10

### Electrochemical characterization of zinc-based electrolyte for the RFB half-cell

The electrochemical behavior of the solution prepared according to Example 8 has been characterized with cyclic voltammetries in a classical three electrodes cell using glassy carbon as working electrode, Pt net as counter electrode and Ag/AgCl 3 M KCI as reference electrode with AMEL 2550 Potentiostat/galvanostat at 25 °C. As shown in Figure 6, the classical peaks for Zn deposition and stripping can be detected. The cathodic efficiency of the process can be estimated to be equal to 90%.

### Example 11

### Electrochemical characterization of zinc-based electrolyte for the RFB half-cell: effect of buffering agents on electrochemical behaviour

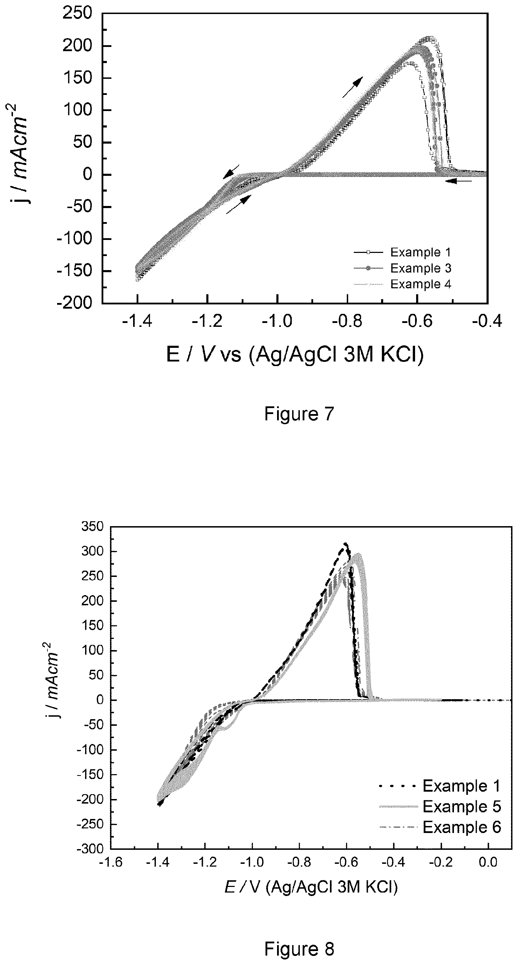

The electrochemical behavior of solution prepared according to Examples 3 and 4 have been characterized with cyclic voltammetries. In order to understand the effects of buffering agents on electrochemical behavior, results have been compared with those obtained using solution described in Example 1. The results are shown in Figure 7. Cyclic voltammetries were performed in a classical three electrodes cell using glassy carbon as working electrode, Pt net as counter electrode and Ag/AgCl 3 M KCI as reference electrode with AMEL 2550 Potentiostat/galvanostat at 25 °C.

### Example 12

### Use of zinc-based electrolyte during the charging phase: dendrites suppression additives effect

The electrochemical behavior of solution prepared according to Example 5 and Example 6 have been characterized with cyclic voltammetries in a classical three electrodes cell using glassy carbon as working electrode, Pt net as counter electrode and Ag/AgCl 3 M KCI as reference electrode with AMEL 2550 Potentiostat/galvanostat at 25 °C. As shown in Figure 8, the classical peaks for Zn deposition and stripping can be detected for both cases: comparing the efficiency values for the two additives, the addition of PEG 8000 induces an increasing of cathodic efficiency from 90 to 93%, while the addition of PEI, according to the Example 6, increases the process efficiency up to 95%.

### Example 13

### Zinc-based electrolyte with dispersed electrodes: preparation of the electrolyte

In order to increase battery capacity, power and energy density dispersed electrodes were added to the Zn-based solution prepared according to Example 7. In order to properly disperse functionalized particles, slurry electrode or fluidized bed electrode in the form of particles acting as electrodes in the half-cell, the electrolyte formulation has been slightly modified. As an example, to the solution of Example 7, Xanthan gum has been added as thickener additive in order to increase the electrolyte viscosity. Carbon black VXC72R and zinc particles with diameter having as average dimension in the range from 10 µm to 60 µm. The final formulation is shown in Table 9.

**Table 9: example of Zn based electrolyte with dispersed electrodes**

| **Chemical compound** | **Concentration [g/L]** |
|---|---|
| Zinc sulfamate | 258 |
| Aluminum sulfate octadecahydrate | 66.6 |
| Lithium sulfate | 109 |
| Sodium citrate tribasic | 2 |
| Citric acid | 3.25 |
| Polyethylenimine (PEI) | 0.05 |
| Xanthan gum | 1.87 |
| Carbon black | 125 |
| Zn particles | 75 |

### Example 14

### Zinc-based electrolyte characterization with dispersed electrodes

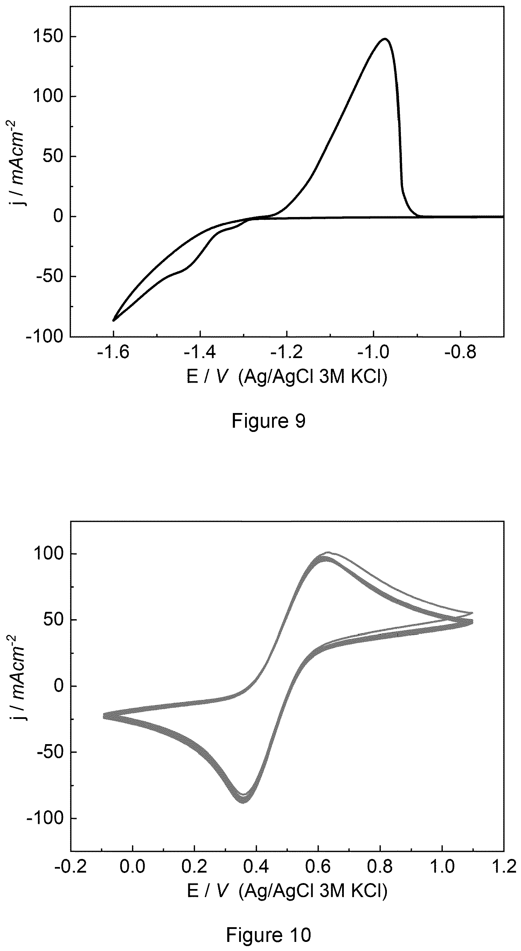

The electrochemical behavior of zinc electrolyte with dispersed conductive particles has been analyzed by means of cyclic voltammetries in a classical threeelectrode cell using glassy carbon as reference electrode, Pt wire as counter electrode and Pt wire as pseudo-reference electrode using AMEL 2550 Potentiostat/galvanostat at 25 °C. Figure 9 shows the electrochemical behavior of solution prepared according to Example 11.

### Example 15

### Preparation of a Fe-based solution to be coupled with Zn-based half-cell

The solution has been prepared dissolving 198.81 g of FeCl₂·4H₂O in acidified Millipore water, followed by the sodium citrate tribasic C₆H₅Na₃O₇·2H₂O. In order to increase the electrolyte conductivity, sodium chloride has been added until a conductivity of 95 mS/cm has been reached. The pH of the solution has been modified with HCl to the final value of 1.75. The final formulation of the solution is shown in Table 10.

**Table 10: example of Fe based electrolyte**

| **Chemical compound** | **Chemical formula** | **Concentration [g/L]** | **Concentration [mol/L]** |
|---|---|---|---|
| Iron (II) chloride tetrahydrate | FeCl₂·4H₂O | 198.81 | 1 |
| Sodium citrate tribasic dihydrate | C₆H₅Na₃O₇·2H₂O | 29.41 | 0.1 |
| Sodium Chloride | NaCl | 116.88 | 2 |

### Example 16

### Preparation of a Fe-based solution to be coupled with Zn-based half-cell

The solution has been prepared dissolving 198,81 g of FeCl₂·4H₂O and 162,2 of FeCl₃ in acidified Millipore water, followed by sodium citrate tribasic, C₆H₅Na₃O₇ 2H₂O. In order to increase the electrolyte conductivity, sodium chloride has been added until a conductivity of 125 mS/cm has been reached. The pH of the solution has been modified with HCl to the final value of 1.75. The final formulation of the solution is shown in Table 11.

**Table 11: example of Fe based electrolyte**

| **Chemical compound** | **Chemical formula** | **Concentration [g/L]** | **Concentration [mol/L]** |
|---|---|---|---|
| Iron (II) chloride tetrahydrate | FeCl₂·4H₂O | 198.81 | 1 |
| Iron (III) chloride | FeCl₃ | 162.2 | 1 |
| Sodium citrate tribasic dihydrate | C₆H₅Na₃O₇·2H₂O | 29.41 | 0.1 |
| Sodium chloride | NaCl | 116.88 | 2 |

### Example 17

### Preparation of a Fe-based electrolyte with dispersed electrodes

In order to increase battery capacity, power and energy density dispersed electrodes were added to the Fe-based solution prepared according to Example 15. In order to properly disperse functionalized particles, slurry electrode or fluidized bed electrode in the form of particles acting as electrodes in the half-cell, the electrolyte formulation has been slightly modified with the addition of thickener additives necessary to guarantee the better particles dispersion and a suitable electrolyte viscosity in case of dispersed particles. To the solution of Example 15 Xanthan gum has been added as thickener additive in order to increase the electrolyte viscosity according to Table 12. Carbon black VXC72R and iron particles with diameter having as average dimension in the range from 10 µm to 60 µm. The final formulation is shown in Table 12.

**Table 12: example of Fe based electrolyte with dispersed electrodes**

| **Chemical compound** | **Concentration [g/L]** |
|---|---|
| Iron (II) Chloride tetrahydrate | 258 |
| Sodium Citrate Tribasic Dihydrate | 66.6 |
| Sodium Chloride | 109 |
| Xanthan Gum | 3.75 |
| Carbon black | 125 |
| Fe particles | 200 |

### Example 18

### Fe-based solution electrochemical characterization

The electrochemical behavior of solution prepared according to Example 15 has been characterized with cyclic voltammetries performed in a classical three electrodes cell using glassy carbon as working electrode, Pt net as counter electrode and Ag/AgCl 3 M KCI as reference electrode with AMEL 2550 Potentiostat/galvanostat at 25 °C. The results are shown in Figure 10.

### Example 19

### Fe-based solution electrochemical characterization

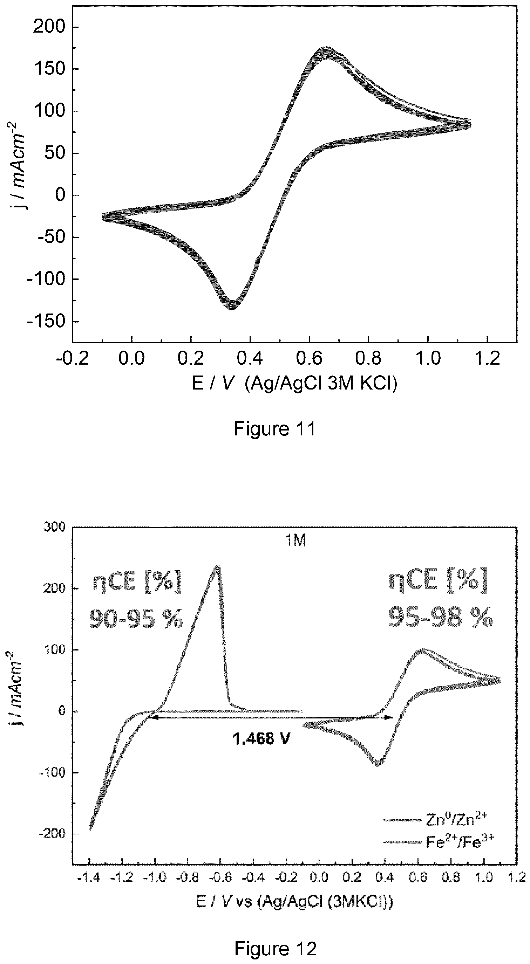

The electrochemical behavior of solution prepared according to Example 16 has been characterized with cyclic voltammetries performed in a classical three electrodes cell using glassy carbon as working electrode, Pt net as counter electrode and Ag/AgCl 3 M KCI as reference electrode with AMEL 2550 Potentiostat/galvanostat at 25 °C. The results are shown in Figure 11.

### Example 20

### Zn-Fe RFB with tuned electrolytes

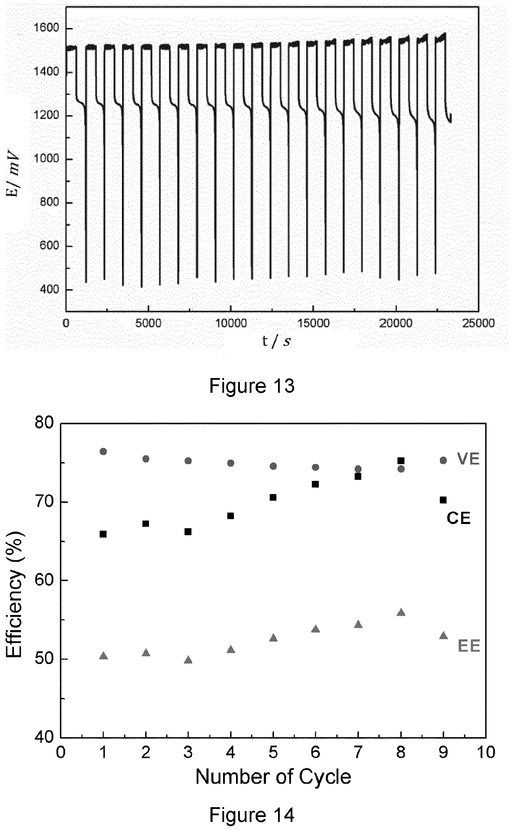

The electrolytes prepared in Examples 1 and 15 have been used to produce a zinc-iron RFB having the structure shown in Fig. 1. Electrochemical tests have been carried out in a RFB with pumping system using a Cadex C8000 battery testing system, applying a current density of 25 mAcm⁻². The nominal area for the two electrodes was equal to 25 cm², resulting in a total applied current of 625 mA during the charge phase and -625 mA during the discharge phase. Figure 12 shows the electrochemical characterization of both electrolytes by mean of cyclic voltammetries; the curves on the left side of the graph regard the Zn-based electrolyte, while the curves on the right side of the graph regard the Fe-based electrolyte. The cathodic efficiencies of both processes range from 90 to 95% in case of Zn-based electrolyte and from 95 to 98% in case of Fe-based electrolyte. Figure 13 shows a classical graph of charge and discharge cycles for this RFB. In Figure 14 the current efficiency, voltaic efficiency and energy efficiency for the relative cycles are also reported.

### Example 21

### Zn-Fe rechargeable flow battery using the developed Zn half-cell

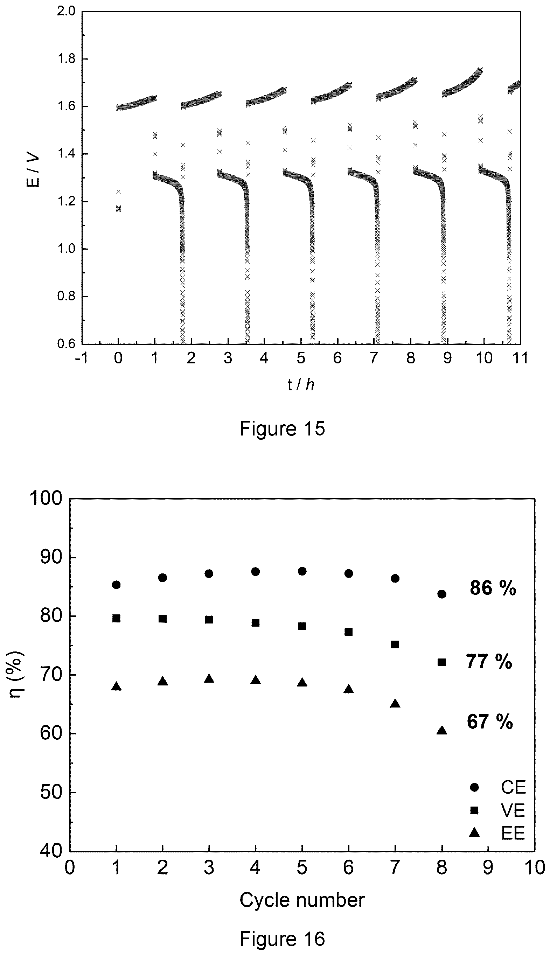

The electrolytes prepared in Examples 5 and 15 have been used to produce a second zinc-iron RFB having the structure shown in Fig. 1. Electrochemical tests have been carried out in this RFB with pumping system using a Biologic VMP-300 potentiostat/galvanostat, applying a current density of 20 mAcm⁻². The nominal area for the two electrodes was equal to 25 cm², resulting in a total applied current of 500 mA during the charge phase and -500 mA during the discharge phase. Figure 15 shows the classical graph of charge and discharge cycles for this RFB. In Figure 16 the current efficiency, voltaic efficiency and energy efficiency for the relative cycles are also reported.

### Example 22

### Zn-Fe RFB with tuned electrolytes: additives effect on battery performances

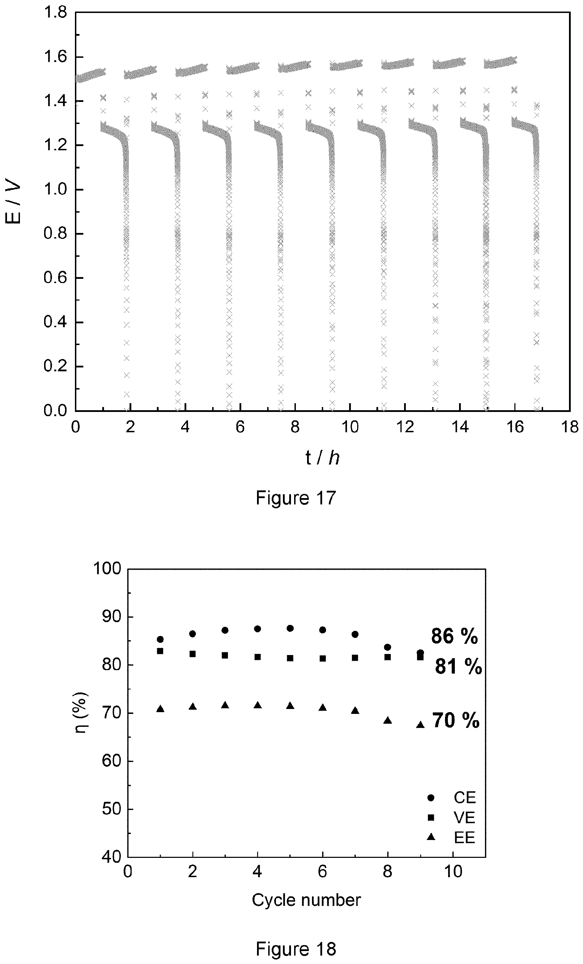

The electrolytes prepared in Examples 7 and 15 have been used to produce a second zinc-iron RFB having the structure shown in Fig. 1, to test the effect of the addition of an agent suppressing the formation of dendrites (PEG). Electrochemical tests have been carried out in this RFB with pumping system using a Biologic VMP-300 potentiostat/galvanostat, applying a current density of 20 mAcm⁻². The nominal area for the two electrodes was equal to 25 cm², resulting in a total applied current of 500 mA during the charge phase and -500 mA during the discharge phase. Figure 17 shows the classical graph of charge and discharge cycles for this RFB. In Figure 18 the current efficiency, voltaic efficiency and energy efficiency for the relative cycles are also reported.

### Example 23

### Zn-Fe RFB with tuned electrolytes

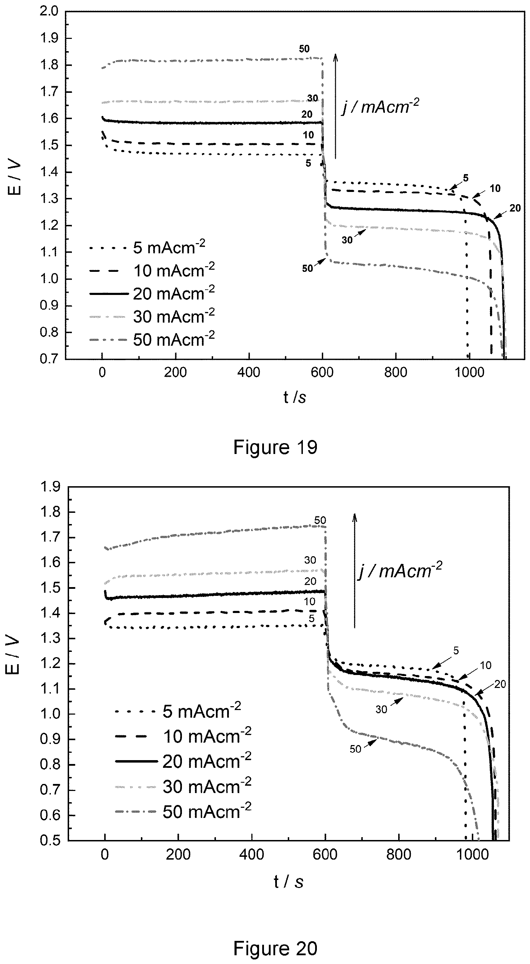

The electrolytes prepared in Examples 7 and 15 have been used to produce a second zinc-iron RFB having the structure shown in Fig. 1, to test the effect of the addition of an agent suppressing the formation of dendrites (PEI). Electrochemical tests have been carried out in this RFB with pumping system using a Biologic VMP-300 potentiostat/galvanostat, applying different current densities, i.e., 5, 10, 20, 30 and 50 mAcm⁻². The nominal area for the two electrodes was equal to 25 cm², resulting in a total applied current of 125, 250, 500, 750 and 1250 mA respectively during the charge phase, and -125, -250, -500, -750 and -1250 mA respectively during the discharge phase. Figure 19 shows the classical graph of charge and discharge cycle for each applied current density of this RFB.

### Example 24

### Zn-Fe RFB with tuned electrolytes

The test of Example 23 has been repeated, using however the solutions prepared in Examples 8 and 16 as electrolytes. Electrochemical tests have been carried out in this RFB with pumping system using a Biologic VMP-300 potentiostat/galvanostat, applying different current densities, i.e., 5, 10, 20, 30 and 50 mAcm⁻². The nominal area for the two electrodes was equal to 25 cm², resulting in a total applied current of 125, 250, 500, 750 and 1250 mA respectively during the charge phase, and -125, -250, - 500, -750 and -1250 mA during the discharge phase. Figure 20 shows the classical graph of charge and discharge cycles for each applied current density of this RFB.

## Claims

1. Zinc-iron rechargeable flow battery (100), comprising:
- a first half-cell (102; 202) comprising a first electrolyte (116; 216) in which Zn²⁺ ions are dissolved, derived from dissolution of zinc sulfamate (Zn(SO₃NH₂)₂), zinc carbonate (ZnCOs) or a combination thereof, and an electrode (108; 208) disposed within the first half-cell, said first half-cell connected in a closed-loop configuration through a first pump (124; 224) to a first external tank (120; 220) containing the first electrolyte;
- a second half-cell (104; 304) comprising a second electrolyte (118; 318) in which Fe²⁺ and Fe³⁺ ions are dissolved and one electrode (110; 310) disposed within the second half-cell, said second half-cell connected in a closed-loop configuration through a second pump (126; 326) to a second external tank (122; 322) containing the second electrolyte; and
- a separator (106) between the two half-cells.

2. Zinc-iron rechargeable flow battery according to claim 1, in which said first electrolyte is a water-based solution having a pH from about 1 to about 6, preferably from 1.5 to 5, more preferably from 2 to 4, still more preferably from 3 to 4.

3. Zinc-iron rechargeable flow battery according to claim 2, in which said first electrolyte is a water-based solution of zinc sulfamate and has a concentration of Zn²⁺ ions between 0.001 M and 10 M, preferably from 0.5 M to 5 M, still more preferably from 1 M to 2 M.

4. Zinc-iron rechargeable flow battery according to any one of the preceding claims, in which said first electrolyte further comprises a hydrogen evolution suppressor selected among Pb, Bi, Mn, W, Cd, As, Sb, Sn and their oxides, boric acid and combinations thereof, in an overall concentration in the range between 0.001 M to 5 M, preferably from 0.01 M to 2 M, still more preferably from 0.05 M to 1 M.

5. Zinc-iron rechargeable flow battery according to any one of the preceding claims, in which said first electrolyte further comprises a levelling agent selected among polyethylene glycol (PEG), polyethylenimine (PEI), dextrins, cyclodextrins, sucrose, glucose, caffeine and combinations thereof, in an overall concentration between 0.0001 ppm to 10000 ppm, preferably from 0.002 to 5000 ppm, still more preferably from 1 ppm to 1000 ppm.

6. Zinc-iron rechargeable flow battery according to any one of the preceding claims, in which said first electrolyte further comprises a salt increasing the electrolyte conductivity selected among AlCl₃, Al₂(SO₄)₃, MgCl₂, MgSO₄, NaCl, Na₂SO₄, LiCI, Li₂SO₄, KCI, NH₄Cl or combinations thereof, at a concentration in a range between 0.001 M to 5 M, preferably from 0.1 M to 2 M, still more preferably from 0.5 M to 1 M.

7. Zinc-iron rechargeable flow battery according to any one of the preceding claims, in which said first electrolyte further comprises a thickener selected among Xanthan gum, Arabic gum, carboxymethyl cellulose, chitosan, Agar-Agar, sodium alginate and polyethylenoxyde, in a range between 0.0001 % to 10%, preferably from 0.1% to 5%, still more preferably from 0.1% to 1% by weight of the electrolyte.

8. Zinc-iron rechargeable flow battery according to any one of the preceding claims, in which said second electrolyte of the invention is a water-based of Fe²⁺ and Fe³⁺ salts selected from chlorides, sulfates, sulfamates, acetates and carbonates in an amount such to obtain a concentration of Fe²⁺ ions in the range from 0.001 M to 10 M and/or Fe³⁺ ions concentration in the range of 0.01 M to 10 M, and has a pH from about 0.1 to 6, preferably from 0.5 to 5, still more preferably from 0.95 to 3.

9. Zinc-iron rechargeable flow battery according to any one of the preceding claims, in which said second electrolyte further comprises one or more additives selected from a complexing agent of the Fe²⁺ and Fe³⁺ ions, an agent stabilizing the Fe²⁺ and Fe³⁺ ions, a thickener and a salt increasing the electrolyte conductivity.

10. Zinc-iron rechargeable flow battery according to claim 9, in which said complexing agent of the Fe²⁺ and Fe³⁺ ions is selected among soluble citrate salts, tartaric salts, ammonium-based salts, oxalic salts and EDTA, in a concentration between 0.001 M to 10 M, preferably from about 0.1 M to about 2 M.

11. Zinc-iron rechargeable flow battery according to claim 9, in which said agent stabilizing the Fe²⁺ and Fe³⁺ ions is selected among ammonium salts, oxalates, acetates, tartrates, ascorbic acid, ethylene glycol and dimethyl sulfoxide (DMSO), at a concentration in the range between 0.001 M to 10 M, preferably from about 0.1 M to about 2 M.

12. Zinc-iron rechargeable flow battery according to claim 9, in which said thickener is selected among Xanthan gum, Arabic gum, carboxymethyl cellulose, chitosan, Agar-Agar, sodium alginate and polyethylenoxyde, in an amount between 0.0001% to 10%, preferably from 0.1% to 5%, still more preferably from 0.1% to 1% by weight of the electrolyte.

13. Zinc-iron rechargeable flow battery according to any one of the preceding claims, in which the electrodes (108; 110; 208; 310) are made of carbon-based material, of metal, or are in the form of dispersed electrodes.

14. Zinc-iron rechargeable flow battery according to any one of the preceding claims, in which the electrode of the first half-cell (108; 208) consists of a dispersed electrode comprising Zn particles, Zn coated particles, carbon black particles or mixtures thereof, having average size in the range from 10 nm to 1000 µm, preferably from 20 nm to 500 µm, more preferably from 20 nm to 200 µm still more preferably from 20 nm to 100 µm in an amount comprised in the range from 0.01% by weight to 50% by weight, preferably from 1% by weight to 30% by weight, still more preferably from 5% by weight to 20% by weight.

15. Zinc-iron rechargeable flow battery according to any one of the preceding claims, in which the electrode of the first half-cell (108; 208) consists of a slurry of electrically conductive particles selected among Zn particles, graphite particles, graphene particles, graphene oxide particles, transition metal oxide particles, carbon-based materials decorated with metal oxide particles, carbon nanotubes, carbon black particles, Zn coated particles and mixtures thereof, having the average size in the range from 10 nm to 1000 µm preferably from 20 nm to 500 µm more preferably from 20 nm to 200 µm still more preferably from 20 nm to 100 µm.

## Patentansprüche

1. Wiederaufladbare Zink-Eisen-Flow-Batterie (100), umfassend:
- eine erste Halbzelle (102; 202), umfassend einen ersten Elektrolyten (116; 216), in dem Zn²⁺-Ionen gelöst sind, die aus der Auflösung von Zinksulfamat (Zn(SO₃NH₂)₂), Zinkcarbonat (ZnCOs) oder einer Kombination davon stammen, und eine Elektrode (108; 208), die innerhalb der ersten Halbzelle angeordnet ist, wobei die erste Halbzelle in einer geschlossenen Konfiguration durch eine erste Pumpe (124; 224) mit einem ersten externen Tank (120; 220) verbunden ist, der den ersten Elektrolyten enthält;
- eine zweite Halbzelle (104; 304), umfassend einen zweiten Elektrolyten (118; 318), in dem Fe²⁺ - und Fe³⁺-Ionen gelöst sind, und eine Elektrode (110; 310), die innerhalb der zweiten Halbzelle angeordnet ist, wobei die zweite Halbzelle in einer geschlossenen Konfiguration durch eine zweite Pumpe (126; 326) mit einem zweiten externen Tank (122; 322) verbunden ist, der den zweiten Elektrolyten enthält; und
- einen Separator (106) zwischen den zwei Halbzellen.

2. Wiederaufladbare Zink-Eisen-Flow-Batterie nach Anspruch 1, wobei der erste Elektrolyt eine Lösung auf Wasserbasis mit einem pH-Wert von etwa 1 bis etwa 6, vorzugsweise von 1,5 bis 5, bevorzugter von 2 bis 4, noch bevorzugter von 3 bis 4 ist.

3. Wiederaufladbare Zink-Eisen-Flow-Batterie nach Anspruch 2, wobei der erste Elektrolyt eine Lösung auf Wasserbasis von Zinksulfamat ist und eine Konzentration von Zn²⁺-Ionen zwischen 0,001 M und 10 M, vorzugsweise von 0,5 M bis 5 M, noch bevorzugter von 1 M bis 2 M aufweist.

4. Wiederaufladbare Zink-Eisen-Flow-Batterie nach einem der vorhergehenden Ansprüche, wobei der erste Elektrolyt ferner einen Wasserstoffentwicklungsunterdrücker umfasst, der aus Pb, Bi, Mn, W, Cd, As, Sb, Sn und deren Oxiden, Borsäure und Kombinationen davon ausgewählt ist, in einer Gesamtkonzentration im Bereich zwischen 0,001 M und 5 M, vorzugsweise von 0,01 M bis 2 M, noch bevorzugter von 0,05 M bis 1 M.

5. Wiederaufladbare Zink-Eisen-Flow-Batterie nach einem der vorhergehenden Ansprüche, wobei der erste Elektrolyt ferner ein Nivellierungsmittel umfasst, das aus Polyethylenglykol (PEG), Polyethylenimin (PEI), Dextrinen, Cyclodextrinen, Saccharose, Glucose, Koffein und Kombinationen davon ausgewählt ist, in einer Gesamtkonzentration zwischen 0,0001 ppm und 10000 ppm, vorzugsweise von 0,002 bis 5000 ppm, noch bevorzugter von 1 ppm bis 1000 ppm.

6. Wiederaufladbare Zink-Eisen-Flow-Batterie nach einem der vorhergehenden Ansprüche, wobei der erste Elektrolyt ferner ein Salz umfasst, das die Elektrolytleitfähigkeit erhöht, ausgewählt aus AlCl₃, Al₂(SO₄)₃, MgCl₂, MgSO₄, NaCl, Na₂SO₄, LiCl, Li₂SO₄, KCl, NH₄Cl oder Kombinationen davon, in einer Konzentration in einem Bereich zwischen 0,001 M bis 5 M, vorzugsweise von 0,1 M bis 2 M, noch bevorzugter von 0,5 M bis 1 M.

7. Wiederaufladbare Zink-Eisen-Flow-Batterie nach einem der vorhergehenden Ansprüche, wobei der erste Elektrolyt ferner ein Verdickungsmittel umfasst, das aus Xanthangummi, arabischem Gummi, Carboxymethylcellulose, Chitosan, Agar-Agar, Natriumalginat und Polyethylenoxid ausgewählt ist, in einem Bereich zwischen 0,0001 % und 10 %, vorzugsweise von 0,1 % bis 5 %, noch bevorzugter von 0,1 % bis 1 Gew.- % des Elektrolyten.

8. Wiederaufladbare Zink-Eisen-Flow-Batterie nach einem der vorhergehenden Ansprüche, wobei der zweite erfindungsgemäße Elektrolyt auf Wasserbasis von Fe²⁺ and Fe³⁺-Salzen ist, die aus Chloriden, Sulfaten, Sulfamaten, Acetaten und Carbonaten in einer solchen Menge ausgewählt sind, dass eine Konzentration von Fe²⁺-Ionen im Bereich von 0,001 M bis 10 M und/oder Fe³⁺-Ionenkonzentration im Bereich von 0,01 M bis 10 M erhalten wird, und einen pH-Wert von etwa 0,1 bis 6, vorzugsweise von 0,5 bis 5, noch bevorzugter von 0,95 bis 3 aufweist.

9. Wiederaufladbare Zink-Eisen-Flow-Batterie nach einem der vorhergehenden Ansprüche, wobei der zweite Elektrolyt ferner ein oder mehrere Additive umfasst, die aus einem Komplexbildner der Fe²⁺ und Fe³⁺-Ionen, einem die Fe²⁺ und Fe³⁺-Ionen stabilisierenden Mittel, einem Verdickungsmittel und einem die Elektrolytleitfähigkeit erhöhenden Salz ausgewählt sind.

10. Wiederaufladbare Zink-Eisen-Flow-Batterie nach Anspruch 9, wobei der Komplexbildner der Fe²⁺ und Fe³⁺-Ionen aus löslichen Citratsalzen, Weinsäuresalzen, Salzen auf Ammoniumbasis, Oxalsalzen und EDTA in einer Konzentration zwischen 0,001 M bis 10 M, vorzugsweise von etwa 0,1 M bis etwa 2 M, ausgewählt ist.

11. Wiederaufladbare Zink-Eisen-Flow-Batterie nach Anspruch 9, wobei das die Fe²⁺ und Fe³⁺-Ionen stabilisierende Mittel aus Ammoniumsalzen, Oxalaten, Acetaten, Tartraten, Ascorbinsäure, Ethylenglykol und Dimethylsulfoxid (DMSO) in einer Konzentration im Bereich von 0,001 M bis 10 M, vorzugsweise von etwa 0,1 M bis etwa 2 M, ausgewählt ist.

12. Wiederaufladbare Zink-Eisen-Flow-Batterie nach Anspruch 9, wobei das Verdickungsmittel aus Xanthangummi, arabischem Gummi, Carboxymethylcellulose, Chitosan, Agar-Agar, Natriumalginat und Polyethylenoxyd in einer Menge zwischen 0,0001 % bis 10 %, vorzugsweise von 0,1 % bis 5 %, noch bevorzugter von 0,1 % bis 1 Gew.-% des Elektrolyten, ausgewählt ist.

13. Wiederaufladbare Zink-Eisen-Flow-Batterie nach einem der vorhergehenden Ansprüche, wobei die Elektroden (108; 110; 208; 310) aus kohlenstoffbasiertem Material, aus Metall oder in Form von dispergierten Elektroden hergestellt sind.

14. Wiederaufladbare Zink-Eisen-Flow-Batterie nach einem der vorhergehenden Ansprüche, wobei die Elektrode der ersten Halbzelle (108; 208) aus einer dispergierten Elektrode besteht, die Zn-Partikel, Zn-beschichtete Partikel, Rußpartikel oder Mischungen davon mit einer durchschnittlichen Größe im Bereich von 10 nm bis 1000 µm, vorzugsweise von 20 nm bis 500 µm, bevorzugter von 20 nm bis 200 µm, noch bevorzugter von 20 nm bis 100 µm, in einer Menge im Bereich von 0,01 Gew.- % bis 50 Gew.- %, vorzugsweise von 1 Gew.- % bis 30 Gew.- %, noch bevorzugter von 5 Gew.- % bis 20 Gew.- % umfasst.

15. Wiederaufladbare Zink-Eisen-Flow-Batterie nach einem der vorhergehenden Ansprüche, wobei die Elektrode der ersten Halbzelle (108; 208) aus einer Aufschlämmung elektrisch leitfähiger Partikel besteht, die aus Zn-Partikeln, Graphitpartikeln, Graphenpartikeln, Graphenoxidpartikeln, Übergangsmetalloxidpartikeln, mit Metalloxidpartikeln dekorierten kohlenstoffbasierten Materialien, Kohlenstoffnanoröhren, Rußpartikeln, Znbeschichteten Partikeln und Mischungen davon ausgewählt sind, mit einer durchschnittlichen Größe im Bereich von 10 nm bis 1000 µm, vorzugsweise von 20 nm bis 500 µm, bevorzugter von 20 nm bis 200 µm, noch bevorzugter von 20 nm bis 100 µm.

## Revendications

1. Batterie à écoulement rechargeable zinc-fer (100), comprenant :
- une première demi-pile (102 ; 202) comprenant un premier électrolyte (116 ; 216) dans lequel des ions Zn²⁺ sont dissous, issus de la dissolution de sulfamate de zinc (Zn(SO₃NH₂)₂), de carbonate de zinc (ZnCOs) ou d'une combinaison de ceux-ci, et une électrode (108 ; 208) disposée au sein de la première demi-pile, ladite première demi-pile étant reliée dans une configuration en boucle fermée par le biais d'une première pompe (124 ; 224) à un premier réservoir externe (120 ; 220) contenant le premier électrolyte ;
- une seconde demi-pile (104 ; 304) comprenant un second électrolyte (118 ; 318) dans lequel des ions Fe²⁺ et Fe³⁺ sont dissous et une électrode (110 ; 310) disposée au sein de la seconde demi-pile, ladite seconde demi-pile étant connectée dans une configuration en boucle fermée par le biais d'une seconde pompe (126 ; 326) à un second réservoir externe (122 ; 322) contenant le second électrolyte ; et
- un séparateur (106) entre les deux demi-piles.

2. Batterie à écoulement rechargeable zinc-fer selon la revendication 1, dans laquelle ledit premier électrolyte est une solution aqueuse ayant un pH d'environ 1 à environ 6, de préférence de 1,5 à 5, plus préférentiellement de 2 à 4, encore plus préférentiellement de 3 à 4.

3. Batterie à écoulement rechargeable zinc-fer selon la revendication 2, dans laquelle ledit premier électrolyte est une solution aqueuse de sulfamate de zinc et possède une concentration en ions Zn²⁺ entre 0,001 M et 10 M, de préférence de 0,5 M à 5 M, encore plus préférentiellement de 1 M à 2 M.

4. Batterie à écoulement rechargeable zinc-fer selon l'une quelconque des revendications précédentes, dans laquelle ledit premier électrolyte comprend en outre un suppresseur de dégagement d'hydrogène sélectionné parmi Pb, Bi, Mn, W, Cd, As, Sb, Sn et leurs oxydes, l'acide borique et les combinaisons de ceux-ci, dans une concentration globale dans la plage entre 0,001 M et 5 M, de préférence de 0,01 M à 2 M, encore plus préférentiellement de 0,05 M à 1 M.

5. Batterie à écoulement rechargeable zinc-fer selon l'une quelconque des revendications précédentes, dans laquelle ledit premier électrolyte comprend en outre un agent de nivellement sélectionné parmi le polyéthylène glycol (PEG), la polyéthylèneimine (PEI), les dextrines, les cyclodextrines, le saccharose, le glucose, la caféine et les combinaisons de ceux-ci, dans une concentration globale entre 0,0001 ppm et 10 000 ppm, de préférence de 0,002 à 5000 ppm, encore plus préférentiellement de 1 ppm à 1000 ppm.

6. Batterie à écoulement rechargeable zinc-fer selon l'une quelconque des revendications précédentes, dans laquelle ledit premier électrolyte comprend en outre un sel augmentant la conductivité d'électrolyte sélectionné parmi AlCl₃, Al₂(SO₄)₃, MgCl₂, MgSO₄, NaCl, Na₂SO₄, LiCI, Li₂SO₄, KCI, NH₄Cl ou les combinaisons de ceux-ci, à une concentration dans une plage entre 0,001 M et 5 M, de préférence de 0,1 M à 2 M, encore plus préférentiellement de 0,5 M à 1 M.

7. Batterie à écoulement rechargeable zinc-fer selon l'une quelconque des revendications précédentes, dans laquelle ledit premier électrolyte comprend en outre un épaississant sélectionné parmi la gomme xanthane, la gomme arabique, la carboxyméthylcellulose, le chitosane, l'agar-agar, l'alginate de sodium et le polyéthylèneoxyde, dans une plage entre 0,0001 % et 10 %, de préférence de 0,1 % à 5 %, encore plus préférentiellement de 0,1 % à 1 % en poids de l'électrolyte.

8. Batterie à écoulement rechargeable zinc-fer selon l'une quelconque des revendications précédentes, dans laquelle ledit second électrolyte de l'invention est un électrolyte aqueux de sels de Fe²⁺ et Fe³⁺ sélectionnés parmi les chlorures, les sulfates, les sulfamates, les acétates et les carbonates dans une quantité telle qu'elle permet d'obtenir une concentration en ions Fe²⁺ dans la plage de 0,001 M à 10 M et/ou une concentration en ions Fe³⁺ dans la plage de 0,01 M à 10 M, et possède un pH d'environ 0,1 à environ 6, de préférence de 0,5 à 5, encore plus préférentiellement de 0,95 à 3.

9. Batterie à écoulement rechargeable zinc-fer selon l'une quelconque des revendications précédentes, dans laquelle ledit second électrolyte comprend en outre un ou plusieurs additifs sélectionnés parmi un agent complexant des ions Fe²⁺ et Fe³⁺, un agent stabilisant les ions Fe²⁺ et Fe³⁺, un épaississant et un sel augmentant la conductivité d'électrolyte.

10. Batterie à écoulement rechargeable zinc-fer selon la revendication 9, dans laquelle ledit agent complexant des ions Fe²⁺ et Fe³⁺ est sélectionné parmi les sels de citrate solubles, les sels tartriques, les sels à base d'ammonium, les sels oxaliques et l'EDTA, dans une concentration entre 0,001 M et 10 M, de préférence d'environ 0,1 M à environ 2 M.

11. Batterie à écoulement rechargeable zinc-fer selon la revendication 9, dans laquelle ledit agent stabilisant les ions Fe²⁺ and Fe³⁺ est sélectionné parmi les sels d'ammonium, les oxalates, les acétates, les tartrates, l'acide ascorbique, l'éthylène glycol et le diméthylsulfoxyde (DMSO), à une concentration dans la plage entre 0,001 M et 10 M, de préférence d'environ 0,1 M à environ 2 M.

12. Batterie à écoulement rechargeable zinc-fer selon la revendication 9, dans laquelle ledit épaississant est sélectionné parmi la gomme xanthane, la gomme arabique, la carboxyméthylcellulose, le chitosane, l'agar-agar, l'alginate de sodium et le polyéthylèneoxyde, dans une quantité entre 0,0001 % et 10%, de préférence de 0,1 % à 5 %, encore plus préférentiellement de 0,1 % à 1 % en poids de l'électrolyte.

13. Batterie à écoulement rechargeable zinc-fer selon l'une quelconque des revendications précédentes, dans laquelle les électrodes (108 ; 110 ; 208 ; 310) sont constituées de matériau à base de carbone, de métal, ou se présentent sous forme d'électrodes dispersées.

14. Batterie à écoulement rechargeable zinc-fer selon l'une quelconque des revendications précédentes, dans laquelle l'électrode de la première demi-pile (108 ; 208) est constituée d'une électrode dispersée comprenant des particules de Zn, des particules revêtues de Zn, des particules de noir de carbone ou des mélanges de celles-ci, ayant une taille moyenne dans la plage de 10 nm à 1000 µm, de préférence de 20 nm à 500 µm, plus préférentiellement de 20 nm à 200 µm, encore plus préférentiellement de 20 nm à 100 µm, dans une quantité comprise dans la plage de 0,01 % en poids à 50 % en poids, de préférence de 1 % en poids à 30 % en poids, encore plus préférentiellement de 5 % en poids à 20 % en poids.

15. Batterie à écoulement rechargeable zinc-fer selon l'une quelconque des revendications précédentes, dans laquelle l'électrode de la première demi-pile (108 ; 208) est constituée d'une pâte de particules électriquement conductrices sélectionnées parmi les particules de Zn, les particules de graphite, les particules de graphène, les particules d'oxyde de graphène, les particules d'oxyde de métal de transition, les matériaux à base de carbone décorés avec des particules d'oxyde de métal, les nanotubes de carbone, les particules de noir de carbone, les particules revêtues de Zn et les mélanges de ceux-ci, ayant la taille moyenne dans la plage de 10 nm à 1000 µm, de préférence de 20 nm à 500 µm, plus préférentiellement de 20 nm à 200 µm, encore plus préférentiellement de 20 nm à 100 µm.
